# NEUE EUROPÄISCHE PATENTSCHRIFT

(11) **EP 3 189 722 B2**
(45) Veröffentlichungstag und Bekanntmachung des Hinweises auf die Entscheidung über den Einspruch: **18.10.2023**
(45) Hinweis auf die Patenterteilung: 27.03.2019
(21) Anmeldenummer: 16206635.1
(22) Anmeldetag: 23.12.2016
(51) Int. Cl.: A01B 69/00, A01F 15/08

(54) **AUTOMATISIERTE PENDELFAHRT BEI RUNDBALLENPRESSEN**
AUTOMATED STEERING IN ROUND BALERS
DIRECTION AUTOMATISÉE POUR DES PRESSES À BALLES RONDES

(30) Priorität: 11.01.2016 DE 102016000205
(43) Veröffentlichungstag der Anmeldung: 12.07.2017
(73) Patentinhaber: PÖTTINGER Landtechnik GmbH, 4710 Grieskirchen (AT)
(72) Erfinder: Baldinger, Markus, 4084 St. Agatha (AT); Prechtl, Wolfgang, 4722 Bruckwaasen (AT); Preimeß, Hans-Jörg, 9811 Lendorf (AT)
(74) Vertreter: Thoma, Michael

(56) Entgegenhaltungen:
- EP-A1- 1 634 491
- EP-A1- 1 685 759
- EP-A1- 2 272 312
- EP-A2- 2 267 567
- EP-B1- 1 813 146
- US-A1- 2010 063 690
- Ming Li: "Review of Research on agricultural vehicle autonomous guidance", Int. J Agric & Biol Engineering, 1 September 2009 (2009-09-01), pages 1-16,

## Beschreibung

Die Erfindung betrifft eine Einrichtung zur Durchführung einer automatisierten Pendelfahrt einer Rundballenpresse nach Anspruch 1.

Aus dem Stand der Technik an sich bekannte Rundballenpressen sind dafür vorgesehen, möglichst gleichmäßig geformte, zylindrische Ballen aus insbesondere organischem Material zu verpressen. Hierzu wird eine Ballenkammer der Rundballenpresse über deren gesamte Kammerbreite möglichst gleichmäßig befüllt und das eingefüllte Material zu einem Ballen geformt. Diese gleichmäßige Befüllung kann intuitiv bzw. manuell durch eine entsprechehttp://ls-oeb-web.prodoeb.lens.l121/epo_queries/nde gleichmäßige Pendelfahrt der Rundballenpresse bzw. einer Zugmaschine mit Rundballenpresse über den entsprechenden Schwad bzw. das zu verpressende Material erfolgen oder es werden in der Ballenkammer beispielsweise die Durchmesser des Ballens an dessen unterschiedlichen insbesondere axial beabstandeten Bereichen gemessen und in Abhängigkeit davon wird ein Richtungssignal an den Fahrer des Schleppers bzw. der Rundballenpresse weitergegeben.

Bekanntermaßen laufen diese Prozesse manuell oder wie beschrieben lediglich teilautomatisiert ab. Dabei besteht der Nachteil, dass der Fahrer der Rundballenpresse bzw. des Schleppers nur ungenau abschätzen kann, ob eine gewünschte zylindrische Form des Ballens erreicht wird und darüber hinaus umständlich und kontinuierlich die Lenkbewegungen zur Pendelfahrt der Rundballenpresse ausführen muss.

Die Schrift EP 1 813 146 B2 schlägt eine Rundballenpresse mit einem Schlepper vor, bei der die relative Schwadposition mittels einer Kamera erfasst und mittels Sensoren an der Rundballenpresse der Ballendurchmesser in verschiedenen Ballenbereichen gemessen wird. Übersteigt die Differenz der gemessenen Ballendurchmesser einen vorbestimmten Wert, wird eine größere Abweichung zwischen der Maschinenmitte und der Schwadmitte zugelassen, so dass die Rundballenpresse relativ zum Schwad weiter nach rechts oder weiter nach links fahren kann. Ferner zeigt die Schrift EP 2 267 567 A2 eine Ballenpresse mit einem Schlepper, bei dem zu einem Schwadverlauf, der in einer Karte abgelegt ist, mittels einer GPS-Einrichtung eine pendelnde Fahrgasse für die Rundballenpresse bestimmt wird, die entlang des Schwadverlaufs hin und her pendelt. Werden sensorisch Ungleichmäßigkeiten am Ballen erfasst, wird die vorbestimmte, pendelnde Fahrgasse hinsichtlich ihrer Oszillationsamplitude und Intervalllänge angepasst.

Vor diesem Hintergrund ist es Aufgabe der Erfindung eine verbesserte Einrichtung zur Durchführung eines automatisierten Lade- bzw. Füllvorgangs für eine Rundballenpresse und ein entsprechendes Verfahren bereitzustellen und den Aufwand zum Transport der Ballen zu reduzieren sowie die zum Lagern der Ballen notwendigen Flächen zu verringern. Die Einrichtung und das Verfahren sollen dabei insbesondere den Arbeitsaufwand für eine Bedienperson der Rundballenpresse verringern, wobei gleichzeitig die Zylindrizität der verpressten Ballen verbessert wird.

Diese Aufgabe wird erfindungsgemäß durch eine Einrichtung zur Durchführung einer automatisierten Pendelfahrt einer Rundballenpresse mit den Merkmalen des Anspruchs 1 bzw. des Anspruchs 7 gelöst. Vorteilhafte Ausbildungen sind Gegenstand der Unteransprüche.

Aus diesen zwei Sensorinformationen kann über die Regelungs-/Steuerungsvorrichtung ein entsprechender Lenkbefehl festgelegt und an das Lenksystem weitergeleitet werden. Diese Prozedur stellt einen permanenten Abgleich dar und kann somit das erforderliche Pendeln des Schleppers bzw. der Rundballenpresse über dem Schwad automatisieren. Die Pendelfahrt kann dabei selbstverständlich auch in Kurvenfahrt der Rundballenpresse erfolgen.

In einer bevorzugten Ausführung ist es denkbar, dass wenigstens einer der Sensoren an der Rundballenpresse und/oder an einem Schlepper vorgesehen ist. In einer Ausführung der erfindungsgemäßen Einrichtung, die eine Rundballenpresse und einen Schlepper umfasst, kann beispielsweise der erste Sensor zum Erfassen der Lage des Schwads an dem Schlepper vorgesehen sein, während der zweite Sensor zum Erfassen des Zustands des Ballens an der Rundballenpresse vorgesehen ist. Es ist aber auch denkbar, dass beide Sensoren an der Rundballenpresse vorgesehen sind. Vorteilhaft kann so entweder auf bereits ohnehin am Schlepper vorgesehene Sensoren zur Erfassung des Schwads zurückgegriffen werden oder alternativ die erfindungsgemäße Einrichtung möglichst umfassend integriert in der Rundballenpresse vorliegen, wodurch die Einrichtung unabhängiger von der Ausstattung etwaiger Schlepper ist.

In einer weiteren bevorzugten Ausführung ist denkbar, dass die Lenkbefehle an einen Schlepper ausgegeben werden. In dem Fall, in dem die Einrichtung sowohl die Rundballenpresse als auch den Schlepper umfasst, kann ein Schlepper, welcher ein automatisches Lenksystem umfasst, mit entsprechenden Lenkbefehlen zur Durchführung der Pendelfahrt gesteuert werden.

In einer weiteren bevorzugten Ausführung ist denkbar, dass der erste Sensor zum Erfassen der Lage des wenigstens einen Schwads ein Sensorbalken, ein Radarsensor oder ein Laserscanner ist. Dieser kann dabei wie oben beschrieben entweder an einem Schlepper oder an der Rundballenpresse selbst vorgesehen sein. Denkbar ist auch eine Ausführung, bei der entsprechende Sensoren sowohl am Schlepper als auch an der Rundballenpresse vorgesehen sind.

In einer weiteren bevorzugten Ausführung ist denkbar, dass der zweite Sensor zum Erfassen des Zustands des von der Rundballenpresse verpressten Ballens ein Berührungssensor, ein Kraftsensor und/oder ein berührungsloser Sensor ist. Insbesondere kann dabei ein Berührungssensor als Tastsensor ausgebildet sein, welcher den Ballen kontinuierlich mittels entsprechender Taster abtastet. Dabei können zwei, drei oder mehr Taster axial verteilt am Ballen anliegen bzw. diesen abtasten.

Die Erfindung ist auch auf ein Verfahren zur automatisierten Pendelfahrt einer Rundballenpresse nach Anspruch 7 gerichtet. Das Verfahren umfasst die Schritte:
Erfassen der Lage wenigstens eines Schwads relativ zu der Rundballen-presse;
Erfassen eines Zustands eines von der Rundballenpressen verpressten Ballens; und
Ausgeben von Lenkbefehlen in Abhängigkeit von der Lage des Schwads und vom Zustand des Ballens.

Dabei ist vorgesehen, dass die Lenkbefehle die Rundballenpresse zur zylindrischen Ballenformung des Ballens so über den Schwad steuern, dass der Schwad in dem Bereich der Rundballenpresse aufgenommen wird, in welchem der Ballen seinen geringsten Durchmesser aufweist.

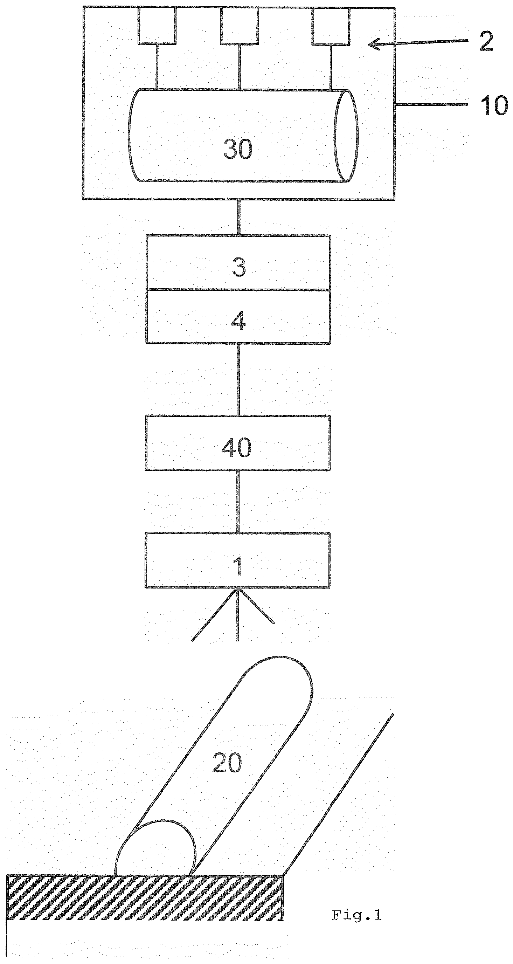

Weitere Einzelheiten und Vorteile der Erfindung sind anhand der einzelnen Figur 1 aufgezeigt. Die Figur 1 zeigt dabei eine schematische Ansicht der erfindungsgemäßen Einrichtung.

Die Rundballenpresse 10 weist hierbei einen ersten Sensor 1 und drei zweite Sensoren 2 zum Erfassen des Zustands eines von der Rundballenpresse 10 verpressten Ballens 30 auf. Der erste Sensor 1 erfasst erfindungsgemäß die Lage von zu verpressendem organischem Material, welches üblicherweise in einem Schwad 20 angeordnet ist, der wiederum auf einer von der Rundballenpresse 10 abgefahrenen Oberfläche liegt. Die Sensoren 1, 2 sind mit einer Regelungs-/Steuerungsvorrichtung 3 gekoppelt, welche wiederum eine Ausgabevorrichtung 4 umfasst oder welche mit einer Ausgabevorrichtung 4 gekoppelt ist, mittels der Lenkbefehle ausgegeben werden können. Die Lenkbefehle können dabei beispielsweise an einen Schlepper 40 geleitet werden, welcher über eine automatische Lenkvorrichtung verfügt.

Wenn einer der zweiten Sensoren 2 Messdaten erfasst, die darauf schließen lassen, dass im Bereich des entsprechenden Sensors 2 der Durchmesser des Ballens 30 geringer ist als in den anderen Bereichen des Ballens 30, dann kann dies von der Regelungs-/Steuervorrichtung 3 entsprechend interpretiert werden und die Ausgabevorrichtung 4 kann Lenkbefehle dahingehend an eine Lenkvorrichtung des beispielhaft genannten Schleppers 40 schicken, dass der Schlepper 40 und damit die Rundballen-presse 10 so über den Schwad 20 positioniert bzw. gefahren wird, dass der Bereich des Ballens 30 mit dem geringeren Durchmesser vermehrt mit Biomaterial wie beispielsweise Stroh oder Heu vergrößert wird. Die entsprechenden Messungen werden dabei kontinuierlich durchgeführt, sodass im Ergebnis der Ballen 30 möglichst gleichmäßig zylindrisch verpresst wird und sich dabei eine Pendelfahrt der Rundballenpresse 10 ergibt.

Der erste Sensor 1 kann als Sensorbalken, Radarsensor und/oder als Laserscanner ausgebildet sein und entweder an einem Schlepper 40 oder direkt an der Rundballen-presse 10 selbst vorgesehen sein.

Der zweite Sensor 2 zum Erfassen des Zustands des Ballens 30 ist bevorzugt als Berührungssensor ausgeführt, welcher die Oberfläche des Ballens 30 insbesondere kontinuierlich abtastet. Denkbar ist auch die Ausführung des zweiten Sensors als Kraftsensor, welcher beispielsweise eine Gewichtsverteilung des Ballens 30 erfasst oder einen Anpressdruck eines entsprechenden Tasters messen kann. Hierbei können jeweils auch mehrere zweite Sensoren vorgesehen sein, die über die Breite des Ballens 30 bzw. entlang dessen axialer Dimension angeordnet sind, um so verwertbare Daten zur axialen Verteilung der den Ballen 30 bildenden Biomasse zu liefern.

Es kann sich bei der Rundballen-presse 10 um eine von einem Schlepper zu ziehende Vorrichtung handeln. Im Ergebnis wird es einem Nutzer der Rundballenpresse 10 ermöglicht, eine automatische Pendelfahrt der Rundballenpresse 10 im Bereich eines Feldes oder einer sonstigen Fläche mit zu verpressender Biomasse einzustellen. Hierbei muss in dem jeweiligen Bereich lediglich entsprechend geschwadete Biomasse vorliegen. Dies ist beispielsweise bei abgeernteten Getreidefeldern oder bei abgemähten Weiden üblicherweise der Fall. Die automatische Pendelfahrt kann dann im gesamten Bereich der Fläche erfolgen, in welcher die Schwade 20 vorliegen.

Es ist auch denkbar die erfindungsgemäße Pendelfahrt bzw. die entsprechende Einrichtung mit einer übergeordneten automatisierten Lenkung zu kombinieren, bei der die Rundballenpresse 10 zunächst grob auf einer zu bearbeitenden Fläche gesteuert wird. Die grobe Steuerung sorgt dabei dafür, dass die Rundballenpresse 10 innerhalb der zu bearbeitenden Fläche bewegt wird und ferner auch Bereiche der Fläche automatisch befahren werden können, in denen keine Schwade 20 vorliegen.

Somit ergibt sich eine übergeordnete Steuerung der Rundballenpresse 10, welche unabhängig von etwaigen Schwaden 20 ist, mit einer untergeordneten erfindungsgemäßen automatischen Steuerung, die lediglich Lenkungsbewegung in einem Bereich durchführt, welcher dem Abstand zwischen zwei Schwaden 20 entspricht.

Es ist auch denkbar, dass mittels des wenigstens einen ersten Sensors 1 mehr als ein Schwad 20 erfasst wird und die Regelungs-/Steuerungsvorrichtung die gleichzeitige Verpressung aller erfassten Schwade 20 berücksichtigt. Bei entsprechender Breite der Rundballenpresse 10 kann diese dabei gleichzeitig über zwei oder mehr Schwade 20 gelenkt werden, wobei ebenfalls eine Pendelfahrt der Rundballenpresse 10 durchgeführt wird. Ferner ist es denkbar, dass die Verpressung der Ballen 30 heterogen durchgeführt wird, wobei zu Beginn der Verpressung axial mittig oder axial außen liegende Bereiche des Ballens 30 stärker mit organischem Material aufgefüllt werden, während im Laufe der Verpressung eine gleichmäßigere Bildung des Ballens 30 entlang seiner Längsachse durchgeführt wird.

Nach der Erfindung ist vorgesehen, dass gegen Ende des Verpressungsvorgangs eines Ballens die axial äußeren Bereich des Ballens 30 stärker mit organischem Material aufgefüllt werden als die axial mittleren Bereiche des Ballens 30. Hierdurch kann gegebenenfalls eine komprimiertere Ballenform erreicht werden, als bei einer homogenen Verpressung des Ballens 30. Dadurch werden beim Verpressen des organischen Materials einer landwirtschaftlichen Fläche weniger Ballen 30 erzeugt, was einen geringeren Aufwand zum Transport der Ballen 30 von den entsprechenden landwirtschaftlichen Flächen zu Lager- oder Verbrauchsplätzen der Ballen 30 erforderlich macht. Auch können die zum Lagern der entsprechend stärker verdichteter Ballen 30 notwendigen Flächen verringert werden.

## Patentansprüche

1. Einrichtung zur Durchführung einer automatisieren Pendelfahrt einer Rundballenpresse (10), mit einem Schlepper (40), wenigstens einer Rundballenpresse (10), wenigstens zwei Sensoren (1, 2), wenigstens einer Regelungs-/Steuerungsvorrichtung (3) und wenigstens einer Ausgabevorrichtung (4) zur Ausgabe von Lenkbefehlen an eine Lenkvorrichtung des Schleppers (40), wobei wenigstens ein erster Sensor (1) zum Erfassen der Lage wenigstens eines Schwads (20) relativ zu der Rundballenpresse (10) eingerichtet ist, wobei wenigstens ein zweiter Sensor (2) zum Erfassen des Ballendurchmessers eines von der Rundballenpresse (10) verpressten Ballens (30) in mehreren Ballenbereichen eingerichtet ist und wobei die Ausgabevorrichtung (4) in Abhängigkeit von der Lage des Schwads (20) und vom Zustand des Ballens (30) Lenkbefehle ausgibt, **dadurch gekennzeichnet, dass** die Lenkbefehle der Ausgabevorrichtung (4) die Rundballenpresse (10) so über den Schwad (20) steuern, dass der Schwad (20) in dem Bereich der Rundballenpresse (10) aufgenommen wird, in welchem der Ballen seinen geringsten Ballendurchmesser besitzt, wobei aus der erfassten Lage der Rundballenpresse (10) relativ zum Schwad (20) ein maximal mögliches Fahrtrichtungskorrektursignal an die Lenkvorrichtung des Schleppers abgeleitet wird, und wobei die Lenksignale der Ausgabevorrichtung (4) die Rundballenpresse (10) so über den Schwad (20) steuern, dass gegen Ende des Verpressvorgangs eines Ballens (30) die axial äußeren Bereiche des Ballens (30) stärker mit organischem Material aufgefüllt werden als die axialen mittleren Bereiche des Ballens (30).

2. Einrichtung nach Anspruch 1, **dadurch gekennzeichnet, dass** wenigstens einer der Sensoren (1, 2) an der Rundballenpresse (10) und/oder an dem Schlepper (40) vorgesehen ist.

3. Einrichtung nach einem der vorhergehenden Ansprüche, **dadurch gekennzeichnet, dass** der erste Sensor (1) zum Erfassen der Lage des wenigstens einen Schwads (20) ein Sensorbalken ist.

4. Einrichtung nach einem der vorhergehenden Ansprüche, **dadurch gekennzeichnet, dass** der erste Sensor (1) zum Erfassen der Lage des wenigstens einen Schwads (20) ein Radarsensor und/oder ein Laserscanner ist.

5. Einrichtung nach einem der vorhergehenden Ansprüche, **dadurch gekennzeichnet, dass** der zweite Sensor (2) zum Erfassen des Ballendurchmessers des von der Rundballenpresse (10) verpressten Ballens (30) mehrere jeweils als Tastsensor ausgebildete Berührungssensoren umfasst, die axial verteilt am Ballen (30) anliegen und den Ballen (30) abtasten.

6. Einrichtung nach einem der vorhergehenden Ansprüche, wobei der erste Sensor (1) zum Erfassen der Lage des wenigstens einen Schwads (20) an der Rundballenpresse (10) vorgesehen ist.

7. Verfahren zur automatisierten Pendelfahrt einer Rundballenpresse (10) mittels einer Einrichtung nach einem der Ansprüche 1 bis 7, wobei das Verfahren die Schritte umfasst:
Erfassen der Lage wenigstens eines Schwads (20) relativ zu der Rundballenpresse (10);
Erfassen eines Zustands eines von der Rundballenpresse (10) verpressten Ballens (30); und
Ausgeben von Lenkbefehlen in Abhängigkeit von der Lage des Schwads (20) und vom Zustand des Ballens (30).
**dadurch gekennzeichnet, dass**
die Lenkbefehle die Rundballenpresse (10) zur zylindrischen Ballenformung des Ballens (30) so über den Schwad (20) steuern, dass der Schwad (20) in dem Bereich der Rundballenpresse (10) aufgenommen wird, in welchem der Ballen (30) seinen geringsten Durchmesser aufweist, wobei aus der erfassten Lage der Rundballenpresse (10) relativ zum Schwad (20) ein maximal mögliches Fahrtrichtungskorrektursignal an die Lenkvorrichtung des Schleppers (40) abgeleitet wird, und
wobei die Lenksignale der Ausgabevorrichtung (4) die Rundballenpresse (10) so über den Schwad (20) steuern, dass gegen Ende des Verpressvorgangs eines Ballens (30) die axial äußeren Bereiche des Ballens (30) stärker mit organischem Material aufgefüllt werden als die axialen mittleren Bereiche des Ballens (30).

## Claims

1. Unit for performing an automated pendulated driving of a round baler (10), with a tractor (40), at least one round baler (10), at least two sensors (1, 2), at least one regulating/control device (3) and at least one output device (4) for outputting steering commands to a steering device of the tractor (40), wherein at least one first sensor (1) is configured to detect the position of at least one swath (20) relative to the round baler (10), wherein at least one second sensor (2) is configured to detect the bale diameter of a bale (30) pressed by the round baler (10) in multiple bale regions, and wherein the output device (4) outputs steering commands depending upon the position of the swath (20) and on the condition of the bale (30), **characterized in that** the steering commands of the output device (4) control the round baler (10) over the swath (20) such that the swath (20) is received in the region of the round baler (10) in which the bale possesses its smallest bale diameter, wherein, from the detected position of the round baler (10) relative to the swath (20), a maximum possible driving direction correction signal is derived to the steering device of the tractor, wherein the steering signals of the output device (4) control the round baler (10) over the swath (20) such that, towards the end of the pressing process of a bale (30), the axially outer regions of the bale (30) are more strongly filled up with organic material than the axially middle regions of the bale (30).

2. Unit according to claim 1, **characterized in that** at least one of the sensors (1, 2) is provided on the round baler (10) and/or on the tractor (40).

3. Unit according to one of the preceding claims, **characterized in that** the first sensor (1) for detecting the position of the at least one swath (20) is a sensor bar.

4. Unit according to one of the preceding claims, **characterized in that** the first sensor (1) for detecting the position of the at least one swath (20) is a radar sensor and/or a laser scanner.

5. Unit according to one of the preceding claims, **characterized in that** the second sensor (2) for detecting the bale diameter of the bale (30) pressed by the round baler (10) comprises multiple contact sensors respectively configured as probe sensors, which abut on the bale (30) distributed axially and probe the bale (30).

6. Unit according to one of the preceding claims, wherein the first sensor (1) for detecting the position of the at least one swath (20) is provided on the round baler (10).

7. Method for the automated pendulated driving of a round baler (10) by means of a unit according to one of the claims 1 to 7, wherein the method includes the steps:
detecting the position of at least one swath (20) relative to the round baler (10);
detecting a condition of a bale (30) pressed by the round baler (10); and
outputting of steering commands depending upon the position of the swath (20) and on the condition of the bale (30),
**characterized in that**
the steering commands, for the cylindrical bale formation of the bale (30), control the round baler (10) over the swath (20) such that the swath (20) is received in the region of the round baler (10) in which the bale (30) has its smallest diameter, wherein, from the detected position of the round baler (10) relative to the swath (20), a maximum possible driving direction correction signal is derived to the steering device of the tractor (40), and wherein the steering signals of the output device (4) control the round baler (10) over the swath (20) such that, towards the end of the pressing process of a bale (30), the axially outer regions of the bale (30) are more strongly filled up with organic material than the axially middle regions of the bale (30).

## Revendications

1. Moyen destiné à la mise en oeuvre d'une direction automatisée d'une presse à balles rondes (10), comprenant un tracteur (40), au moins une presse à balles rondes (10), au moins deux capteurs (1, 2), au moins un dispositif de régulation/contrôle (3) et au moins un dispositif de sortie (4) destiné à sortir des instructions de direction à un dispositif de direction du tracteur (40), au moins un premier capteur (1) étant conçu pour détecter la position d'au moins un andain (20) par rapport à la presse à balles rondes (10), au moins un second capteur (2) étant conçu pour détecter le diamètre de balle d'une balle (30) pressée par la presse à balles rondes (10) dans plusieurs zones de balles et dans lequel le dispositif de sortie (4) fait sortir des instructions de direction en fonction de la position de l'andain (20) et de l'état de la balle (30), **caractérisé en ce que** les instructions de direction du dispositif de sortie (4) manoeuvrent la presse à balles rondes (10) au-dessus de l'andain (20) de telle manière que l'andain (20) est ramassé dans la zone de la presse à balles rondes (10) dans laquelle la balle possède son diamètre de balle le plus faible, un signal de correction de direction de déplacement maximal possible pour le dispositif de direction du tracteur étant déduit à partir de la position détectée de la presse à balles rondes (10) par rapport à l'andain (20), dans lequel les signaux de direction du dispositif de sortie (4) manoeuvrent la presse à balles rondes (10) au-dessus de l'andain de telle manière que, vers la fin du processus de pressage d'une balle (30), les zones axiales extérieures de la balle (30) sont plus fortement remplies de matière organique que les zones axiales centrales de la balle (30).

2. Moyen selon la revendication 1, **caractérisé en ce qu'**au moins un des capteurs (1, 2) est prévu sur la presse à balles rondes (10) et/ou sur le tracteur (40).

3. Moyen selon l'une des revendications précédentes, **caractérisé en ce que** le premier capteur (1) destiné à détecter la position de l'au moins un andain (20) est une barre de capteur.

4. Moyen selon l'une des revendications précédentes, **caractérisé en ce que** le premier capteur (1) pour détecter la position de l'au moins un andain (20) est un capteur radar et/ou un scanner laser.

5. Moyen selon l'une des revendications précédentes, **caractérisé en ce que** le second capteur (2) pour détecter le diamètre de balle de la balle (30) pressée par la presse à balles rondes (10) comprend plusieurs capteurs de contact réalisés respectivement sous la forme d'un capteur tactile, qui restent contre la balle (30), répartis de manière axiale, et sondent la balle (30).

6. Moyen selon l'une des revendications précédentes, dans lequel le premier capteur (1) pour détecter la position de l'au moins un andain (20) est prévu sur la presse à balles rondes (10).

7. Procédé de direction automatisée d'une presse à balles rondes (10) au moyen d'un moyen selon l'une des revendications 1 à 7, le procédé comprenant les étapes de :
détection de la position d'au moins un andain (20) par rapport à la presse à balles rondes (10) ;
détection d'un état d'une balle (30) pressée par la presse à balles rondes (10) ; et
faire sortir d'instructions de direction en fonction de la position de l'andain (20) et de l'état de la balle (30),
**caractérisé en ce que**
les instructions de direction manoeuvrent la presse à balles rondes (10) au-dessus de l'andain (20) pour la formation en balle cylindrique de la balle (30) de telle manière que l'andain (20) est ramassé dans la zone de la presse à balles rondes (10) dans laquelle la balle (30) présente son diamètre le plus faible, un signal de correction de direction de déplacement maximal possible pour le dispositif de direction du tracteur (40) étant dérivé à partir de la position détectée de la presse à balles rondes (10) par rapport à l'andain (20), et dans lequel les signaux de direction du dispositif de sortie (4) manoeuvrent la presse à balles rondes (10) au-dessus de l'andain (20) de telle manière que, vers la fin du processus de pressage d'une balle (30), les zones axiales extérieures de la balle (30) sont plus fortement remplies de matière organique que les zones axiales centrales de la balle (30).
